# EUROPEAN PATENT APPLICATION

(11) **EP 4 282 845 A1**
(43) Date of publication of application: **29.11.2023**
(21) Application number: 22742116.1
(22) Date of filing: 17.01.2022
(51) Int. Cl.: C04B 35/584

(54) **METHOD FOR PREPARING SILICON NITRIDE CERAMIC MATERIAL**

(30) Priority: 20.01.2021 CN 202110075099
(71) Applicant: Shanghai Institute of Ceramics, Chinese Academy of Sciences, Shanghai 200050 (CN)
(72) Inventor: LIU, Xuejian, Shanghai 200050 (CN); ZHANG, Hui, Shanghai 200050 (CN); HUANG, Zhengren, Shanghai 200050 (CN); YAO, Xiumin, Shanghai 200050 (CN); JIANG, Jindi, Shanghai 200050 (CN); CHEN, Zhongming, Shanghai 200050 (CN)
(74) Representative: Leinweber & Zimmermann
(86) International application number: PCT/CN2022/072353
(87) International publication number: WO 2022/156637

(57) **Abstract**

The present disclosure relates to a method for preparing a silicon nitride ceramic material. The method including: (1) with at least one of silicon powder and silicon nitride powder as original powder and Y₂O₃ powder and MgO powder as sintering aids, the original powder and the sintering aids are mixed in a protective atmosphere, and the mixture is formed into a green body; (2) the resulting green body is put into a reducing atmosphere and pretreated at 500 °C to 800 °C to obtain a biscuit; and the reducing atmosphere is a hydrogen/nitrogen mixed atmosphere with a hydrogen content not higher than 5%; (3) the resulting biscuit is put into a nitrogen atmosphere and subjected to low-temperature heat treatment at 1600 °C to 1800 °C and high-temperature heat treatment at 1800 °C to 2000 °C in sequence.

## Description

### TECHNICAL FIELD

The present disclosure relates the field of silicon nitride ceramic, for example, relates to a method for preparing a silicon nitride ceramic material.

### BACKGROUND

In recent years, semiconductor devices have rapidly developed towards the directions of high power, high frequency and integration. The heat generated by the operation of a semiconductor device is a key factor which causes the failure of the semiconductor device, and the thermal conductivity of an insulating substrate is a key to affect the heat dissipation of the whole semiconductor device. In addition, in fields such as electric vehicle, high-speed railway and rail transit, semiconductor devices often encounter complex mechanical environments, such as bumps and vibrations, during use, which puts strict requirements on the reliability of materials used.

Silicon nitride (Si₃N₄) ceramic with high thermal conductivity is considered as the best insulating semiconductor substrate material with both high strength and high thermal conductivity due to its excellent mechanical and thermal properties, and has great potential to be applied to the heat dissipation of high-power insulated gate bipolar transistors (IGBTs). The theoretical thermal conductivity of silicon nitride crystal can reach more than 400 W·m⁻¹·K⁻¹, and it has the potential to become a substrate with high thermal conductivity. With the potential of excellent mechanical properties and high thermal conductivity, silicon nitride ceramic is expected to make up for the defects of existing ceramic substrate materials, such as alumina and aluminum nitride, and has great potential to be applied to high-end semiconductor devices, particularly heat-dissipating substrates for high-power IGBTs. However, the thermal conductivity of traditional silicon nitride ceramic materials is only 20 to 30 W·m⁻¹·K⁻¹, which cannot meet the requirement of application in the heat dissipation of high-power semiconductor device substrates.

On the other hand, silicon nitride belongs to a compound with strong covalent bonds, and is difficult to be sintered densely by solid diffusion. Thus, it is necessary to add an appropriate amount (usually more than 5 wt%) of rare-earth oxides and/or metal oxides (e.g., Y₂O₃, La₂O₃, MgO, Al₂O₃ and CaO) as sintering aids. However, the addition of the sintering aids will significantly reduce the thermal conductivity of silicon nitride ceramic. Although a low content of sintering aids helps to achieve high thermal conductivity, the low content of sintering aids brings the problem of sintering densification of silicon nitride ceramic.

### TECHNICAL SOLUTION

In view of the aforementioned technical problems, the object of the present disclosure is to provide a method for preparing a silicon nitride ceramic material, so as to obtain a dense silicon nitride ceramic material with high thermal conductivity.

During preliminary research, the inventors found that silicon nitride ceramic has a phonon heat transfer mechanism, and only when the crystal lattice of silicon nitride is intact, the mean free path of phonons is large and the thermal conductivity is high. However, in the process of preparing a silicon nitride ceramic material, lattice oxygen, metal impurity ions, carbon impurities and so on often enter the crystal lattice of silicon nitride to different degrees, forming structural defects, such as vacancies and dislocations, which significantly reduces the mean free path of phonons, thus leading to a decrease in the thermal conductivity of the material. Therefore, how to reduce the contents of lattice oxygen, metal impurity ions, carbon impurities and so on is a key to increase the thermal conductivity of silicon nitride ceramic materials.

The inventors also found that in the process of sintering a silicon nitride ceramic material at high temperature, although the added sintering aids can form eutectic liquid phases, they can easily react with a small amount of In-situ synthesized oxides (SiO₂, SiO*ₓ*, etc.) on the surface of silicon nitride powder to form low-melting point liquid phases, thus promoting the liquid-phase weight transfer of silicon nitride grains to realize high-temperature sintering densification (i.e., liquid-phase sintering mechanism). However, with the decrease of sintering temperature, these liquid phases will form a grain boundary phase mainly composed of an amorphous glass phase between the silicon nitride grains, which is a key for a low thermal conductivity (usually several to a dozen of W·m⁻¹·K¹). Therefore, how to change the amorphous grain boundary phase into a crystallized grain boundary phase (i.e., increasing the content of crystalline phase in the grain boundary phase) is a key to increase the thermal conductivity of the silicon nitride ceramic material.

In addition, the inventors' preliminary research also shows that the thermal conductivity of silicon nitride ceramic tends to decrease with the increase of the ionic radius of rare-earth elements as sintering aids; compared with the MgO sintering aid, the CaO sintering aid added is not conducive to the growth of columnar grains of silicon nitride, and thermal conductivity and strength are generally low.

Through the aforementioned research, the inventors believe that how to choose the appropriate kinds of sintering aids, how to control the contents of the sintering aids and how to control the crystallization degree of the grain boundary phase are key ways to increase the thermal conductivity of the silicon nitride ceramic material.

In this regard, in one aspect, the present disclosure provides a method for preparing a silicon nitride ceramic material, comprising the following steps:
(1) with at least one of silicon powder and silicon nitride powder as original powder and Y₂O₃ powder and MgO powder as sintering aids, the original powder and the sintering aids are mixed under a protective atmosphere, and the mixture is formed into a green body; wherein the molar ratio of the Y₂O₃ powder to MgO powder is (1.0 to 1.4) : (2.5 to 2.9), and the proportion of the sintering aids does not exceed 5 wt% of the sum of the weights of the original powder and the sintering aids; if the original powder is the silicon powder or a powdery mixture of the silicon powder and the silicon nitride powder, the weight of the original powder refers to the sum of the weights of the silicon nitride powder in the original powder and silicon nitride produced after the nitridation of the silicon powder in the original powder; if the original powder contains the silicon powder, the weight of the silicon powder is not less than 75 wt% of the original powder; and the protective atmosphere is an inert atmosphere or a nitrogen atmosphere;
(2) the resulting green body is put into a reducing atmosphere and pretreated at 500 °C to 800 °C to obtain a biscuit; wherein the reducing atmosphere is a hydrogen/nitrogen mixed atmosphere with a hydrogen content not higher than 5 vol%;
(3) the resulting biscuit is put into a nitrogen atmosphere and subjected to low-temperature heat treatment at 1600 °C to 1800 °C and high-temperature heat treatment at 1800 °C to 2000 °C in sequence to obtain the silicon nitride ceramic material; wherein if the original powder contains silicon powder, the resulting biscuit is nitrided after the pretreatment and before the low-temperature heat treatment; the parameters of nitridation include: atmosphere: hydrogen/nitrogen mixed atmosphere with a hydrogen content not higher than 5 vol%; pressure: 0.1 MPa to 0.2 MPa; temperature: 1350 °C to 1450 °C; and temperature preservation time: 3 to 6 hours;
the resulting silicon nitride ceramic material comprises a silicon nitride phase and a grain boundary phase; wherein the content of the silicon nitride phase is more than or equal to 95 wt%; wherein the grain boundary phase is a mixture containing at least three elements, Y, Mg and O; wherein the content of the grain boundary phase is less than or equal to 5 wt%, and the content of a crystalline phase in the grain boundary phase is more than or equal to 40 vol%; and wherein the resulting silicon nitride ceramic material has a thermal conductivity of 90 W·m⁻¹·K⁻¹ or more, and a breakdown field strength of 30 kV/mm or more.

In another aspect, the present disclosure further provides another method for preparing the aforementioned silicon nitride ceramic material, comprising the following steps:
(1) at least one of silicon powder and silicon nitride powder as original powder and Y₂O₃ powder and MgO powder as sintering aids are added with an organic solvent and a binder and mixed in a protective atmosphere to obtain a mixed slurry; wherein the molar ratio of the Y₂O₃ powder to MgO powder is (1.0 to 1.4) : (2.5 to 2.9), and the proportion of the sintering aids does not exceed 5 wt% of the sum of the weights of the original powder and the sintering aids; if the original powder is the silicon powder or a powdery mixture of the silicon powder and the silicon nitride powder, the weight of the original powder refers to the sum of the weights of the silicon nitride powder in the original powder and silicon nitride produced after the nitridation of the silicon powder in the original powder; if the original powder contains silicon powder, the weight of the silicon powder is not less than 75 wt% of the original powder; the protective atmosphere is an inert atmosphere or a nitrogen atmosphere; and the amount of the added binder is 5wt% to 9 wt% of the sum of the weights of the original powder and the sintering aids;
(2) the resulting mixed slurry is tape-cast in a protective atmosphere to obtain a green body;
(3) the resulting green body is put into a reducing atmosphere and pretreated at 500 °C to 800 °C to obtain a biscuit; wherein the reducing atmosphere is a hydrogen/nitrogen mixed atmosphere with a hydrogen content not higher than 5 vol%;
(4) the resulting biscuit is put into a nitrogen atmosphere and subjected to low-temperature heat treatment at 1600 °C to 1800 °C and high-temperature heat treatment at 1800 °C to 2000 °C in sequence to obtain the silicon nitride ceramic material; wherein if the original powder contains silicon powder, the resulting biscuit is nitrided after the pretreatment and before the low-temperature heat treatment; the parameters of nitridation include: atmosphere: hydrogen/nitrogen mixed atmosphere with a hydrogen content not higher than 5 vol%; pressure: 0.1 MPa to 0.2 MPa; temperature: 1350 °C to 1450 °C; and temperature preservation time: 3 to 6 hours;
the resulting silicon nitride ceramic material comprises a silicon nitride phase and a grain boundary phase; wherein the content of the silicon nitride phase is more than or equal to 95 wt%; wherein the grain boundary phase is a mixture containing at least three elements, Y, Mg and O; wherein the content of the grain boundary phase is less than or equal to 5 wt%, and the content of a crystalline phase in the grain boundary phase is more than or equal to 40 vol%; and wherein the resulting silicon nitride ceramic material has a thermal conductivity of 90 W·m⁻¹·K⁻¹ or more, and a breakdown field strength of 30 kV/mm or more.

In the present disclosure, by preparing the powder and the biscuit in the protective atmosphere, oxygen content, metal impurity ions, impurity carbon atoms and other impurities in the original powder are controlled, and the further oxidation of the original powder during preparation is inhibited by pretreating the green body in the reducing atmosphere, ultimately reducing the concentration of lattice oxygen and other defects in the silicon nitride ceramic. On this basis, the composition and content of the grain boundary phase in the silicon nitride ceramic material is also controlled by two-step sintering (in the nitrogen atmosphere, low-temperature heat treatment is carried out at 1600 °C to 1800 °C first, and high-temperature heat treatment is then carried out at 1800 °C to 2000 °C) to increase the content of the crystalline phase in the grain boundary phase, ultimately obtaining the silicon nitride ceramic material with high thermal conductivity and high breakdown field strength. Specifically, at the stage of low-temperature sintering at 1600 °C to 1800 °C, the sintering aids are allowed to produce a liquid phase first to promote densification; at the high-temperature stage of 1800 °C to 2000 °C, the remaining MgO sintering aid is then partially volatilized to control the content of the grain boundary phase to be less than or equal to 5 wt%, and at the same time, the content of the glass phase in the grain boundary phase is further reduced and the content of the crystalline phase in the grain boundary phase is more than or equal to 40 vol%, thus achieving the object of reducing the content of the grain boundary phase and increasing the crystallization degree of the grain boundary phase to increase the thermal conductivity and breakdown field strength of the silicon nitride ceramic material. In the resulting silicon nitride ceramic material, the constituent content of the silicon nitride phase is high, and the volume content of the crystalline phase in the grain boundary phase is more than or equal to 40%. The high-content silicon nitride crystalline phase and the crystalline grain boundary phase help to reduce the scattering of phonons, increasing the thermal conductivity and breakdown field strength of the silicon nitride ceramic material. Generally, the oxides as the sintering aids (such as Y₂O₃ and MgO) and a small amount of the In-situ synthesized oxides (such as SiO₂ and SiOₓ) on the surface of the silicon nitride powder will form eutectic liquid phases (i.e., a liquid-phase sintering mechanism) during the high-temperature sintering of the silicon nitride ceramic material, and with the decrease of sintering temperature, these eutectic liquid phases tend to be transformed in the form of an amorphous glass phase into a solid phase (i.e., the grain boundary phase) to exist in the prepared silicon nitride ceramic material. Compared with silicon nitride grains, the grain boundary phase is lower in thermal conductivity and breakdown field strength, and the higher the content of the amorphous glass phase in the grain boundary phase, the lower its corresponding thermal conductivity and breakdown field strength.

Preferably, the total amount of impurities in the resulting silicon nitride ceramic material is less than or equal to 1.0 wt%. Preferably, the resulting impurities include at least one of lattice oxygen, metal impurity ions and impurity carbon.

In this method, preferably, the time of the pretreatment is 1 to 3 hours.

In this method, preferably, the pressure of the nitrogen atmosphere (preferably containing no hydrogen) is 0.5 MPa to 10 MPa; the time of the low-temperature heat treatment is 1.5 to 2.5 hours; and the time of the high-temperature heat treatment is 4 to 12 hours.

### BENEFICIAL EFFECT

According to the present disclosure, the quantity of structural defects, such as lattice vacancies and dislocations, is reduced by controlling the oxygen content (including prevention of material oxidation and pretreatment by reducing atmosphere in the process of mixing and green body formation), controlling the metal impurity ion content and controlling the carbon content in the preparation process, so as to achieve the object of increasing the thermal conductivity and breakdown field strength of the silicon nitride ceramic material. At the same time, the composition and content of the grain boundary phase are controlled by the two-step sintering process: at the stage of low-temperature sintering, the sintering aids are allowed to produce a liquid phase to promote densification; at the high-temperature stage, the remaining MgO sintering aid is partially volatilized, and at the same time, the content of the glass phase in the grain boundary phase is further reduced, thus achieving the object of reducing the content of the grain boundary phase and increasing the crystallization degree of the grain boundary phase to increase the thermal conductivity of the silicon nitride ceramic material. At the same time, the high breakdown field strength of the material is conducive to the application in high-power devices and helps to reduce the thickness of the substrate material and thermal resistance, so that a copper-clad plate made of this material has the typical characteristics of thermal shock resistance, high reliability and long service life.

### BRIEF DESCRIPTION OF DRAWINGS

FIG. 1 is an XRD (X-Ray Diffraction) pattern of a silicon nitride ceramic material prepared in Example 1.
FIG. 2 is a typical SEM (Scanning Electron Microscope) microstructure of the silicon nitride ceramic material prepared in Example 1.
FIG. 3 is a typical TEM (Transmission Electron Microscope) microstructure of the silicon nitride ceramic material prepared in Example 1.
FIG. 4 is an XRD pattern of a material prepared after nitridation in Example 6.
FIG. 5 is an XRD pattern of the material prepared after high-temperature sintering in Example 6.
FIG. 6 is a typical SEM microstructure of the silicon nitride ceramic material prepared in Example 6.

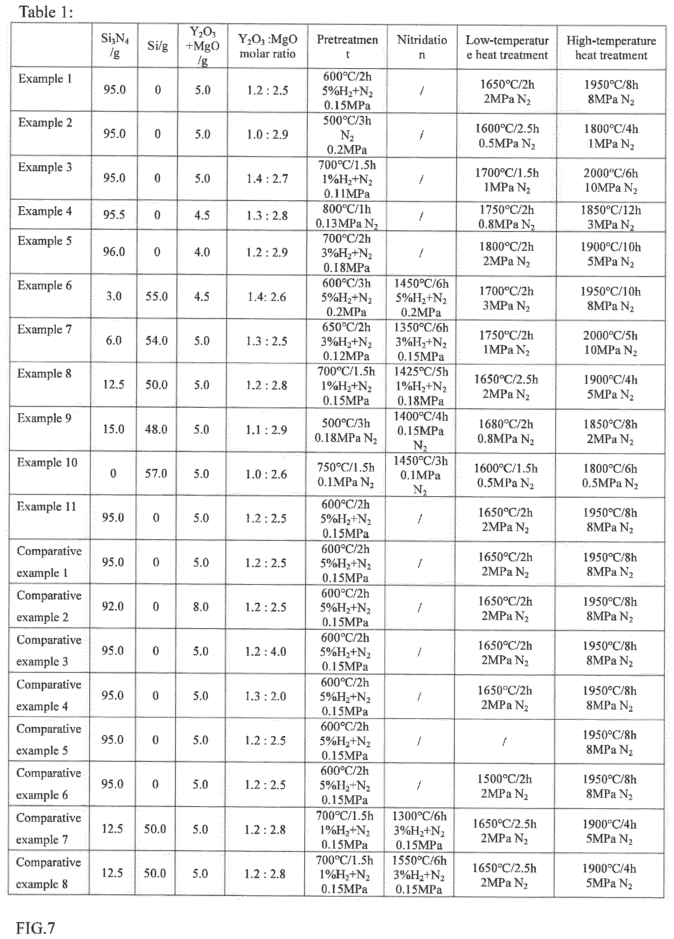

FIG. 7 is a table 1 which shows the composition of a silicon nitride ceramic material and a preparation process therefor.

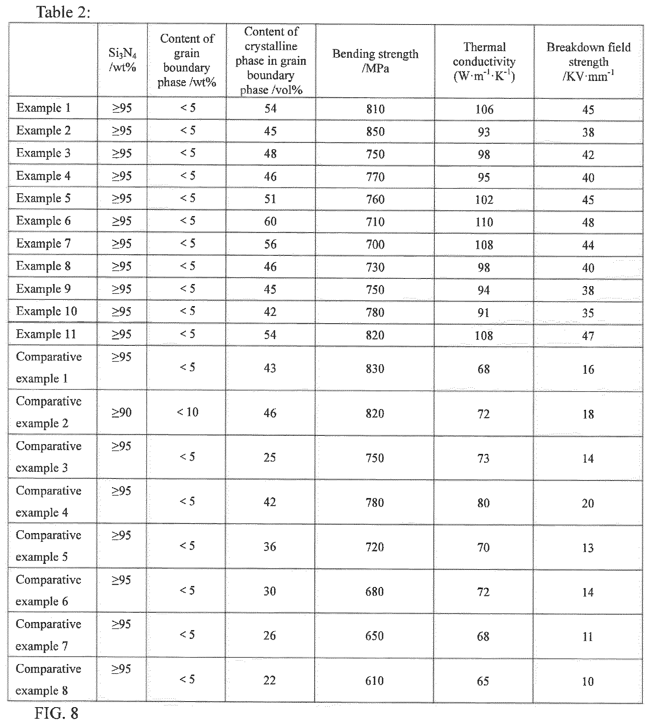

FIG. 8 is a table 2 which shows the phase composition and property parameters of the silicon nitride ceramic material.

### DETAILED DESCRIPTION OF PREFERRED EMBODIMENTS

The present disclosure will be further illustrated by the following embodiments below, and it should be understood that the following embodiments are only used to illustrate the present disclosure rather than to limit it.

In the present disclosure, a silicon nitride ceramic material contains silicon nitride phase not less than 95% and a grain boundary phase with a crystalline phase content not less than 40%. Moreover, the content of lattice oxygen, metal impurity ions, carbon impurities and other impurities in the resulting silicon nitride ceramic material is low, and the total amount is not more than 1.0 wt%. Therefore, the silicon nitride ceramic material in the present disclosure has high thermal conductivity and breakdown field strength.

In one embodiment of the present disclosure, a preparation process in a purified protective atmosphere is adopted to prevent air or hot air from contacting the material, and the impurity content and oxygen content in the prepared ceramic are controlled, so as to increase the thermal conductivity and breakdown field strength of the material without reducing the bending strength of the material. A method for preparing a silicon nitride ceramic material according to the present disclosure will be illustrated below.

The method for preparing a silicon nitride ceramic material specifically includes the following steps: mixing and green body formation in protective atmosphere; pretreatment in reducing atmosphere; and sintering in nitrogen atmosphere and control of sintering system.

Mixing in Protective Atmosphere: original powder and sintering aids Y₂O₃ powder and MgO powder are added with anhydrous ethanol as a solvent in a closed container, uniformly mixed under the protection of the protective atmosphere and then dried to obtain a powdery mixture. Alternatively, the original powder and the sintering aids Y₂O₃ powder and the MgO powder are put into a closed container, added with anhydrous ethanol as an organic solvent and PVB as a binder and then homogeneously mixed under the protection of the protective atmosphere to obtain a mixed slurry. The binder may be 5 wt% of the total weight of the original powder and the sintering aids. The solid content of the resulting mixed slurry is 50 to 70 wt%.

In an alternative embodiment, the protective atmosphere for mixing is an inert atmosphere or a nitrogen atmosphere, preferably a nitrogen atmosphere. Preferably, a closed container with a polyurethane or nylon lining is used for mixing, and nitrogen is introduced into the container to prevent the entry of air.

In an alternative embodiment, the original powder is silicon nitride powder, silicon powder or a powdery mixture of silicon nitride powder and silicon powder. The percentage by weight of the silicon powder in the powdery mixture of silicon nitride and silicon is not less than 75%, that is, silicon nitride generated after the nitridation of the Si powder accounts for more than 80% of the percentage by weight of all the silicon nitride phase.

In an alternative embodiment, the total weight of the sintering aids (Y₂O₃ powder and MgO powder) does not exceed 5 wt% of the total weight of original powder and sintering aids. If there is too much sintering aids, the thermal conductivity and breakdown field strength of the prepared silicon nitride ceramic material will decrease due to the increase of the grain boundary phase content in the material. If there is too little sintering aids, densification cannot be fully promoted, resulting in the low density of the prepared silicon nitride ceramic material and an increase in the number of pores, and as a result, the thermal conductivity and breakdown field strength of the material are decreased. More preferably, the molar ratio of the sintering aids Y₂O₃ to MgO may be (1.0 to 1.4) : (2.5 to 2.9). If MgO is excessive, the eutectic point temperature of the liquid phase formed by the sintering aids will be relatively low, and MgO will be severely volatilized at high temperature, resulting a low thermal conductivity and breakdown field strength of the prepared silicon nitride ceramic material. If there is a small amount of MgO, due to the low proportion of MgO among the sintering aids, the eutectic point temperature of the liquid phase formed by the sintering aids is relatively high, and the material densification effect is relatively poor, resulting in an obvious decrease in both the thermal conductivity and breakdown field strength of the prepared silicon nitride ceramic material.

Green Body Formation in Protective Atmosphere: under the protective atmosphere, the powdery mixture is directly press-molded to obtain a green body. The compression molding method includes but is not limited to dry press molding, isostatic press molding, etc. Alternatively, in the protective atmosphere, the mixed slurry is directly tape-cast to obtain a green body (sheet green body). Preferably, before tape-casting, the mixed slurry is degassed in vacuum (the vacuum degree is generally -0.1 kPa to -10 kPa, lasting for 4 to 24 hours). More preferably, the thickness of the sheet green body is adjusted by controlling the height of the scraper for tape-casting. In an alternative embodiment, the protective atmosphere for green body formation may be an inert atmosphere or a nitrogen atmosphere, preferably a nitrogen atmosphere. Generally, nitrogen is directly introduced for protection in the process of formation.

Pretreatment of Formed Green Body in Reducing Atmosphere: pretreatment is performed on the formed green body in the reducing atmosphere at a certain temperature to remove oxygen from the original powder and organic matters from the green body. In an alternative embodiment, if the original powder is silicon powder or a powdery mixture of silicon nitride and silicon, the green body is pretreated in the reducing atmosphere at a certain temperature before being further nitrided in the reducing atmosphere.

In an alternative embodiment, the pretreatment may be performed in a reducing nitrogen atmosphere with a hydrogen content not higher than 5 vol%, and the gas pressure of the reducing atmosphere is 0.1 MPa to 0.2 MPa. The pretreatment temperature may be 500 °C to 800 °C, and the temperature preservation time may be 1 to 3 hours.

In an alternative embodiment, the nitridation may be performed in a nitrogen atmosphere with a hydrogen content not higher than 5 vol%, and the atmosphere pressure is 0.1 MPa to 0.2 MPa. The nitridation temperature is 1350 °C to 1450 °C, and the temperature preservation time is 3 to 6 hours.

The sintering treatment of the green body includes low-temperature heat treatment and high-temperature heat treatment. Specifically, sintering densification is performed under high nitrogen pressure by adopting a step-by-step sintering process, which includes low-temperature heat treatment for inhibiting the volatilization of low-melting substances in the sintering aids and further high-temperature sintering for densification. In the present disclosure, gas pressure sintering under the condition of high nitrogen pressure should be adopted for sintering treatment, and the atmospheric pressure may be 0.5 MPa to 10 MPa. The green body may be put into a BN crucible for sintering treatment. The temperature of low-temperature heat treatment (low-temperature sintering) may be 1600 °C to 1800 °C, and the temperature preservation time may be 1.5 to 2.5 hours. The temperature of high-temperature heat treatment (high-temperature sintering) may be 1800 °C to 2000 °C, and the temperature preservation time may be 4 to 12 hours.

In the present disclosure, the content of lattice oxygen, metal impurity ions, impurity carbon and so on in the prepared silicon nitride ceramic is low, so it has the characteristics of high thermal conductivity (90 W·m⁻¹·K⁻¹ or more) and high breakdown field strength (30 KV/mm or more).

Examples will be taken to further illustrate the present disclosure in detail below. It should also be understood that the following examples are only used to further illustrate the present disclosure rather than to limit the protection scope of the present disclosure. All non-essential improvements and adjustments which are made by those skilled in the art according to the above contents of the present disclosure shall fall within the protection scope of the present disclosure. The specific technological parameters of the following examples are merely one example in an appropriate range, that is, those skilled in the art can make choices within the appropriate range through the description herein, but the choices are not limited to the specific values of the following examples.

### Example 1

Firstly, 95 g of Si₃N₄ powder, 5 g of sintering aid powders (Y₂O₃: MgO = 1.2 : 2.5, molar ratio), 1 g of castor oil, 1 g of PEG (polyethylene glycol), 70 g of anhydrous ethanol and 200 g of silicon nitride milling balls were put into a polyurethane-lined ball milling tank with an atmosphere protection function, which was vacuumized and filled with a N₂ protective atmosphere in sequence after being sealed by a ball milling tank cover, and ball milling and mixing were performed for 6 hours to obtain a slurry; 5 g of PVB (polyvinyl butyral) and 3 g of DBP (dibutyl phthalate) were further added to the aforementioned slurry, and ball milling was continued for 6 hours under the protection of the N₂ atmosphere to obtain a homogeneous slurry; secondly, the slurry was degassed in vacuum for 6 hours, and was tape-cast to form a substrate green body with a thickness of d±0.05 mm (d = 0.2 to 2.0) under the protection of the N₂ atmosphere; thirdly, the formed substrate green body was cut into a desired shape and put into a BN crucible, which was put into a carbon tube furnace; then, heat treatment was performed according to the following process sequence: (1) under the protection of 0.15 MPa N₂ atmosphere (containing 5% of H₂), debinding pretreatment was performed for 2 hours after temperature was raised to 600 °C at a rate of 5 °C /min; (2) under the protection of 2 MPa N₂ atmosphere, low-temperature heat treatment was performed for 2 hours after temperature was raised to 1650 °C at a rate of 5 °C /min; (3) under the protection of 8 MPa N₂ atmosphere, high-temperature sintering was performed for 8 hours after temperature was raised to 1950 °C at a rate of 3 °C /min; (4) the resulting silicon nitride ceramic substrate material was cooled to room temperature along with the furnace.

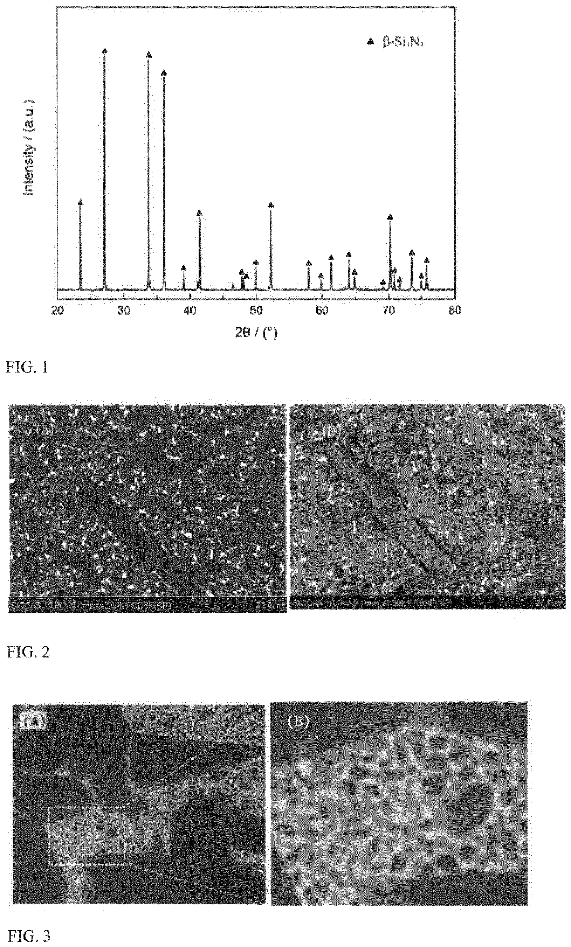

The bending strength of the silicon nitride ceramic substrate material prepared in Example 1 is 810 MPa, the thermal conductivity is 106 W·m⁻¹·K⁻¹, and the breakdown field strength is 45 kV/mm. The XRD pattern of this material is shown in FIG. 1 in which there only exist high-intensity β-Si₃N₄ diffraction peaks and there are no obvious steamed bread-shaped peaks, indicating that the content of the β-Si₃N₄ phase in the prepared material is more than 95 wt% and the content of the grain boundary phase is less than 5%. The typical SEM microstructure of the material is shown in FIG. 2. The material has high density and homogeneous microstructure, the Si₃N₄ grains (grayish black region) show a typical bimodal distribution, and the material consists of fine equiaxed Si₃N₄ grains and large columnar Si₃N₄ grains which are embedded into each other. The content of the grain boundary phase (grayish white region) is low, which is homogeneously dispersed in the Si₃N₄ matrix. Further, through the statistical analysis of at least ten SEM pictures, in combination with the total amount of the introduced sintering aids among the materials less than or equal to 5 wt%, it can be concluded that the content of the grain boundary phase in the silicon nitride ceramic material prepared in the present example is less than 5 wt%. The typical TEM microstructure of the material is shown in FIG. 3 (in FIG. 3, B is a partially enlarged view of the dashed box region indicated by A in FIG. 3). The grain boundary phase (grayish white region) is dispersed among the Si₃N₄ grains (grayish black region), and the grain boundary phase is composed of a glass phase (light region) and a crystalline phase (dark region). Through the statistical analysis of at least ten TEM pictures, it can be concluded that the content of the crystalline phase in the grain boundary phase of the silicon nitride ceramic material prepared in the present example is about 54 vol%.

### Examples 2 to 5

Specific parameters, such as material ratio, sintering aid composition, pretreatment process and sintering process, are shown in Table 1, and for the process, refer to Example 1. The composition and properties of the prepared material are shown in Table 2.

### Example 6

Firstly, 3g of Si₃N₄ powder, 55g of Si powder, 4.5 g of sintering aid powders (Y₂O₃: MgO = 1.4 : 2.6, molar ratio), 0.7g of castor oil, 0.6 g of PEG, 50 g of anhydrous ethanol and 130 g of silicon nitride milling balls were put into a polyurethane-lined ball milling tank with an atmosphere protection function, which was vacuumized and filled with a N₂ protective atmosphere in sequence after being sealed by a ball milling tank cover, and ball milling and mixing were performed for 8 hours to obtain a slurry; 4g of PVB (polyvinyl butyral) and 2.5g of DBP (dibutyl phthalate) were further added to the aforementioned slurry, and ball milling was continued for 6 hours under the protection of the N₂ atmosphere to obtain a homogeneous slurry; secondly, the slurry was degassed in vacuum for 6 hours, and was tape-cast to form a substrate green body under the protection of the N₂ atmosphere; thirdly, the formed substrate green body was cut into a desired shape and put into a BN crucible, which was put into a carbon tube furnace; then, heat treatment was performed according to the following process sequence: (1) under the protection of 0.2 MPa ₂ atmosphere (containing 5% of H₂), debinding pretreatment was performed for 3 hours after temperature was raised to 600 °C at a rate of 4 °C /min; (2) under the protection of 0.2 MPa N₂ atmosphere (containing 5% of H₂), nitridation was performed for 6 hours after temperature was raised to 1450 °C at a rate of 5 °C /min; (3) under the protection of 3 MPa N₂ atmosphere, low-temperature heat treatment was performed for 2 hours after temperature was raised to 1700 °C at a rate of 6 °C /min; (4) under the protection of 8 MPa N₂ atmosphere, high-temperature sintering was performed for 10 hours after temperature was raised to 1950 °C at a rate of 5 °C /min; (5) the resulting silicon nitride ceramic substrate material was cooled to room temperature along with the furnace.

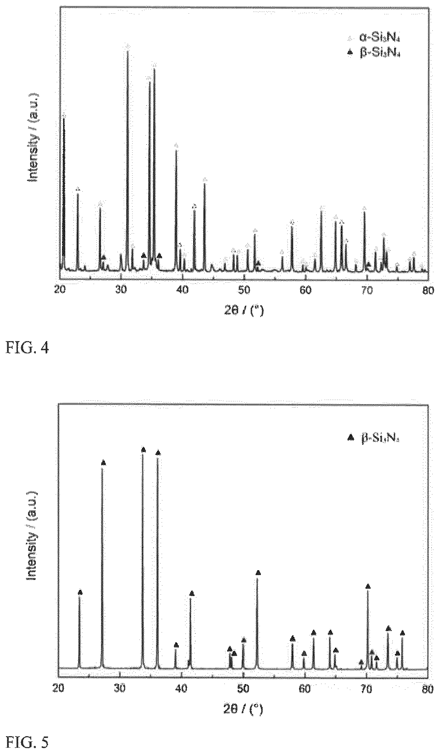

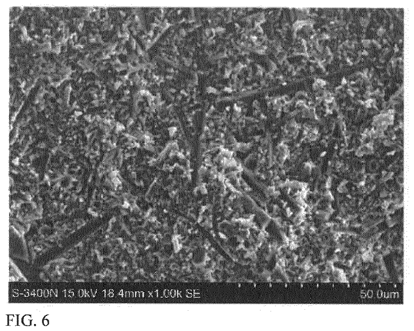

The bending strength of the silicon nitride ceramic substrate material prepared in Example 6 is 710 MPa, the thermal conductivity is 110 W·m⁻¹·K⁻¹, and the breakdown field strength is 48KV/mm. The XRD pattern of this material after nitridation (the aforementioned process (2)) is shown in FIG. 4. The principal crystalline phase is α-Si₃N₄, and there is a small amount of β-Si₃N₄ phase (5% to 10%). The XRD pattern of this material after the high-temperature sintering process (the aforementioned process (4)) is shown in FIG. 5 in which there only exist β-Si₃N₄ diffraction peaks and there are no obvious steamed bread-shaped peaks, indicating that the content of the β-Si₃N₄ phase in the prepared material is more than 95 wt% and the content of the grain boundary phase is less than 5 wt%; and further, by adopting the same method as in example 1 for measurement, the content of the crystalline phase in the grain boundary phase of the prepared material is about 60 vol%. The typical SEM microstructure of the fracture surface of the material is shown in FIG. 6. The material has high density and homogeneous microstructure, and consists of fine equiaxed Si₃N₄ grains and large columnar Si₃N₄ grains which are embedded into each other.

### Examples 7 to 10

Specific parameters, such as material ratio, sintering aid composition, pretreatment process, nitridation process and sintering process, are shown in Table 1, and for the process, refer to Example 6. The composition and properties of the prepared material are shown in Table 2.

### Example 11

For the process of preparing the silicon nitride ceramic material in Example 11, refer to Example 1, except that the main differences are as follows: 95 g of Si₃N₄ powder, 5 g of sintering aid powders (Y₂O₃ : MgO = 1.2 : 2.5, molar ratio), 1 g of castor oil, 1 g of PEG, 70 g of anhydrous ethanol and 200 g of silicon nitride milling balls were put into a polyurethane-lined ball milling tank with an atmosphere protection function, which was vacuumized and filled with a N₂ protective atmosphere in sequence after being sealed by a ball milling tank cover, and ball milling and mixing were performed for 6 hours to obtain a slurry. Drying, sieving, dry press molding (20 MPa) and cold isostatic press molding (200 MPa) were then performed in a nitrogen atmosphere to obtain a green body.

### Comparative Example 1

Specific parameters, such as material ratio, sintering aid composition, pretreatment process and sintering process, are the same as those in Example 1 (see Table 1). For the process, refer to Example 1, except that the difference is that the nitrogen atmosphere protection measure was not adopted in processes such as ball milling and mixing and green body formation. The composition and properties of the prepared material are shown in Table 1. Since the nitrogen atmosphere protection measure according to the present disclosure was not adopted in the material preparation process, the silicon nitride powder among the materials was oxidized to varying degrees, and as a result, both the thermal conductivity and breakdown field strength of the prepared silicon nitride ceramic material were obviously decreased, but the bending strength almost remained unchanged.

### Comparative Example 2

Specific parameters, such as sintering aid composition ratio, pretreatment process and sintering process, are the same as those in Example 1 (see Table 1), except that the difference is that the total amount of the sintering aids was increased. The composition and properties of the prepared material are shown in Table 2. Due to the high content of the sintering aids, the content of the grain boundary phase with low thermal conductivity formed by the sintering aids was high, and as a result, both the thermal conductivity and breakdown field strength of the prepared silicon nitride ceramic material were obviously decreased, but the bending strength almost remained unchanged.

### Comparative Example 3

Specific parameters, such as material ratio, types and total amount of sintering aids, pretreatment process and sintering process, are the same as those in Example 1 (see Table 1), except that the difference is that the ratio of the sintering aids is different (Y₂O₃ : MgO = 1.2 : 4.0). The composition and properties of the prepared material are shown in Table 2. Due to the high proportion of MgO among the sintering aids, the eutectic point temperature of the liquid phase formed by the sintering aids was relatively low, leading to severe volatilization at high temperature, resulting in an obvious decrease in both the thermal conductivity and breakdown field strength of the prepared silicon nitride ceramic material.

### Comparative Example 4

Specific parameters, such as material ratio, types and total amount of sintering aids, pretreatment process and sintering process, are the same as those in Example 1 (see Table 1), except that the difference is that the ratio of the sintering aids was different (Y₂O₃ : MgO = 1.3 : 2.0). The composition and properties of the prepared material are shown in Table 2. Due to the low proportion of MgO among the sintering aids, the eutectic point temperature of the liquid phase formed by the sintering aids was relatively high, and the material densification effect was relatively poor, resulting in an obvious decrease in both the thermal conductivity and breakdown field strength of the prepared silicon nitride ceramic material.

### Comparative Example 5

Specific parameters, such as material ratio, sintering aid composition and pretreatment process, are the same as those in Example 1 (see Table 1), and the process is similar to that in Example 1, except that the difference is that the sintering process was one-step sintering. The composition and properties of the prepared material are shown in Table 2. Because the low-temperature heat treatment process was not included, severe MgO volatilization began under the condition of insufficient densification, and the material densification effect was relatively poor, resulting in an obvious decrease in both the thermal conductivity and breakdown field strength of the prepared silicon nitride ceramic material.

### Comparative Example 6

Specific parameters, such as material ratio, sintering aid composition, pretreatment process and sintering process, are the same as those in Example 1 (see Table 1), and the process is same as that in Example 1, except that the difference is that the temperature of low-temperature heat treatment was low. The composition and properties of the prepared material are shown in Table 2. Due to the low temperature of low-temperature heat treatment, the material densification effect was relatively poor, resulting in an obvious decrease in both the thermal conductivity and breakdown field strength of the prepared silicon nitride ceramic material.

### Comparative Examples 7 and 8

Specific parameters, such as material ratio, sintering aid composition, pretreatment process and sintering process, are the same as those in Example 8 (see Table 1), and the process is same as that in Example 8, except that the difference is that the temperature of nitridation was low (Comparative Example 7) or high (Comparative Example 8). The composition and properties of the prepared material are shown in Table 2. Due to the low nitridation temperature (Comparative Example 7) or high nitridation temperature (Comparative Example 8), the Si powder among the materials was not sufficiently nitrided (Comparative Example 7) or was partially silicified (Comparative Example 8), resulting in an obvious decrease in the mechanical, thermal and electrical properties of the prepared silicon nitride ceramic material.

## Claims

1. A method for preparing a silicon nitride ceramic material, comprising:
(1) with at least one of silicon powder and silicon nitride powder as original powder and Y₂O₃ powder and MgO powder are used as sintering aids, the original powder and the sintering aids are mixed under a protective atmosphere, and the mixture is formed into a green body; wherein a molar ratio of the Y₂O₃ powder to MgO powder is (1.0 to 1.4) : (2.5 to 2.9), and a proportion of the sintering aids does not exceed 5 wt% of a sum of weights of the original powder and the sintering aids; if the original powder is the silicon powder or a powdery mixture of the silicon powder and the silicon nitride powder, weight of the original powder refers to a sum of weights of the silicon nitride powder in the original powder and silicon nitride produced after nitridation of the silicon powder in the original powder; if the original powder contains the silicon powder, weight of the silicon powder is not less than 75 wt% of the original powder; and the protective atmosphere is an inert atmosphere or a nitrogen atmosphere;
**(2)** the green body is put into a reducing atmosphere and pretreated at 500 °C to 800 °C to obtain a biscuit; wherein the reducing atmosphere is a hydrogen/nitrogen mixed atmosphere with a hydrogen content not higher than 5 vol%;
**(3)** the biscuit is put into a nitrogen atmosphere and subjected to low-temperature heat treatment at 1600 °C to 1800 °C and high-temperature heat treatment at 1800 °C to 2000 °C in sequence to obtain the silicon nitride ceramic material; wherein if the original powder contains silicon powder, the resulting biscuit is nitrided after the pretreatment and before the low-temperature heat treatment; parameters of the nitridation include: an atmosphere: hydrogen/nitrogen mixed atmosphere with a hydrogen content not higher than 5 vol%; a pressure: 0.1 MPa to 0.2 MPa; temperature: 1350 °C to 1450 °C; and a temperature preservation time: 3 to 6 hours;
resulting silicon nitride ceramic material comprises a silicon nitride phase and a grain boundary phase; wherein a content of the silicon nitride phase is more than or equal to 95 wt%; wherein the grain boundary phase is a mixture containing at least three elements, Y, Mg and O; wherein the content of the grain boundary phase is less than or equal to 5 wt%, and the content of a crystalline phase in the grain boundary phase is more than or equal to 40 vol%; and wherein the resulting silicon nitride ceramic material has a thermal conductivity of 90 W·m⁻¹·K⁻¹ or more, and a breakdown field strength is more than 30 kV/mm or more.

2. A method for preparing a silicon nitride ceramic material, comprising:
(1) at least one of silicon powder and silicon nitride powder as original powder and Y₂O₃ powder and MgO powder as sintering aids are added with an organic solvent and a binder and mixed in a protective atmosphere to obtain a mixed slurry; wherein a molar ratio of the Y₂O₃ powder to MgO powder is (1.0 to 1.4) : (2.5 to 2.9), and a proportion of the sintering aids does not exceed 5 wt% of a sum of weights of the original powder and the sintering aids; if the original powder is the silicon powder or a mixture of the silicon powder and the silicon nitride powder, the weight of the original powder refers to a sum of weights of the silicon nitride powder in the original powder and silicon nitride produced after nitridation of the silicon powder in the original powder; if the original powder contains silicon powder, a weight of the silicon powder is not less than 75 wt% of the original powder; the protective atmosphere is an inert atmosphere or a nitrogen atmosphere; and an amount of an added binder is 5 to 9 wt% of a sum of a weights of the original powder and the sintering aids;
**(2)** the mixed slurry is tape-cast in a protective atmosphere to obtain a green body;
**(3)** the green body is put into a reducing atmosphere and pretreated at 500 °C to 800 °C to obtain a biscuit; wherein the reducing atmosphere is a hydrogen/nitrogen mixed atmosphere with a hydrogen content not higher than 5 vol%;
**(4)** the biscuit is put into a nitrogen atmosphere and subjected to low-temperature heat treatment at 1600 °C to 1800 °C and high-temperature heat treatment at 1800 °C to 2000 °C in sequence to obtain the silicon nitride ceramic material; wherein if the original powder contains silicon powder, the resulting biscuit is nitrided after the pretreatment and before the low-temperature heat treatment; parameters of the nitridation include: atmosphere: hydrogen/nitrogen mixed atmosphere with a hydrogen content not higher than 5 vol%; pressure: 0.1 MPa to 0.2 MPa; temperature: 1350°C to 1450°C; and temperature preservation time: 3 to 6 hours;
the silicon nitride ceramic material comprises a silicon nitride phase and a grain boundary phase; wherein a content of the silicon nitride phase is more than or equal to 95 wt%; wherein the grain boundary phase is a mixture containing at least three elements, Y, Mg and O; wherein the content of the grain boundary phase is less than or equal to 5 wt%, and the content of a crystalline phase in the grain boundary phase is more than or equal to 40 vol%; and wherein the resulting silicon nitride ceramic material has a thermal conductivity of 90 W·m⁻¹·K⁻¹ or more, and a breakdown field strength of 30 kV/mm or more.

3. The method for preparing a silicon nitride ceramic material according to claim 1 or 2, wherein time of the pretreatment is 1 to 3 hours.

4. The method for preparing a silicon nitride ceramic material according to claim 1, wherein in Step (3), the pressure of the nitrogen atmosphere is 0.5 MPa to 10 MPa; time of the low-temperature heat treatment is 1.5 to 2.5 hours; and time of the high-temperature heat treatment is 4 to 12 hours.

5. The method for preparing a silicon nitride ceramic material according to claim 2, wherein in Step (4), the pressure of the nitrogen atmosphere is 0.5 MPa to 10 MPa; time of the low-temperature heat treatment is 1.5 to 2.5 hours; and time of the high-temperature heat treatment is 4 to 12 hours.

6. The method for preparing a silicon nitride ceramic material according to claim 2, wherein the resulting mixed slurry is degassed in vacuum before tape-casting; and the binder is polyvinyl butyral.
